# DEMANDE DE BREVET EUROPEEN

(11) **EP 2 332 486 A1**
(43) Date de publication de la demande: **15.06.2011**
(21) Numéro de dépôt: 09178650.9
(22) Date de dépôt: 10.12.2009
(51) Int. Cl.: A61C 1/08

(54) **Guide de perçage et moyens de stabilisation de ce guide**

(71) Demandeur: 2INGIS S.A., 1120 Neder Over Heembeek (BE)
(72) Inventeur: De Moyer, Philippe, Albert, Paul, Ghislain, BE-1650, Beersel (BE)
(74) Mandataire: De Groote, Christophe

(57) **Abrégé**

L'invention concerne un ensemble comportant un guide (1) pour percer des orifices de manière guidée dans un os (3) d'un patient afin de loger ensuite des implants dans lesdits orifices. L'ensemble comporte également des éléments de stabilisation permettant de relier le guide à l'os de manière à ce que le guide (1) soit dans une position stable par rapport à l'os (3) avant de commencer à percer lesdits orifices. L'élément de stabilisation (2) comporte des moyens de blocage (4) permettant d'empêcher un mouvement relatif de l'élément de stabilisation (2) par rapport au guide (1) lorsque ces deux parties sont reliées entre-elles. L'élément de stabilisation (2) étant par ailleurs en contact avec l'os (3), on obtient ainsi un ensemble parfaitement ostéostabilisé. De plus, une fois les éléments de stabilisation en place, la position du guide (1) par rapport à l'os (3) sera exclusivement déterminée par les dimensions des éléments de l'ensemble. De préférence, ces dimensions sont individualisées, c'est-à-dire propres à la morphologie individuelle du patient.

## Description

### Domaine de l'invention

L'invention se rapporte au domaine des outils destinés à la pose d'implants, par exemple, mais pas exclusivement, pour la pose d'implants dentaires.

L'invention se rapporte en particulier à un ensemble comportant un guide pour guider le perçage de cavités dans un os d'un patient, lesdites cavités étant destinées à recevoir des implants, et au moins un élément de stabilisation apte à coopérer avec le guide et avec l'os pour stabiliser le guide dans une position déterminée par rapport à l'os du patient.

L'invention se rapporte également à un procédé de fabrication d'un élément de stabilisation d'un tel ensemble.

### État de la technique

On connaît de tels ensembles de la demande de brevet américain US 20040259051. Ce document divulgue un guide permettant de percer des cavités de manière guidée dans la mâchoire d'un patient, ces cavités étant ensuite destinées à recevoir des implants. Ce document divulgue également des éléments de stabilisation qui permettent de stabiliser la position du guide par rapport à l'os de la mâchoire avant de percer les trous destinés aux implants.

Ces éléments de stabilisation se présentent sous forme de d'aiguilles que l'on fait passer au travers de trous présents dans le guide. Après avoir transpercé le tissu gingival se situant entre le guide et l'os, on fait pénétrer l'aiguille dans un trou ménagé dans la mâchoire. La mise en place de plusieurs de ces aiguilles permet de relier le guide à l'os du patient de manière plus ou moins stable avant de démarrer le perçage guidé des cavités destinées aux implants. Dans un mode de réalisation, ces aiguilles sont munies de têtes à leur extrémité, ces têtes venant buter contre la face extérieure du guide lorsque l'aiguille est complètement enfoncée dans ou à travers l'os.

Lorsqu'un tel ensemble connu est mis en oeuvre pour percer les cavités destinées aux futurs implants, les vibrations induites par l'appareil de perçage sur le guide entraînent toutefois fréquemment un glissement des aiguilles hors de leur logement, ce qui non seulement nuit à la stabilité de l'ensemble mais perturbe l'opérateur et pourrait en outre le gêner dans ses mouvements et/ou le blesser. Ce déplacement des aiguilles peut également entraîner un déplacement du guide par rapport à sa position initiale lorsque par exemple une pression est exercée sur le guide par l'appareil de perçage, de sorte que les éléments de guidage ne soient plus en position appropriée par rapport à la mâchoire et qu'on risque de percer les cavités d'implant à un mauvais endroit et/ou de toucher un nerf lors du perçage.

De plus, lorsque le guide d'un tel ensemble connu est destiné à reposer sur un tissu mou, tel que du tissus gingival par exemple, la pression et/ou les contraintes exercées par l'appareil de perçage sur le guide (et donc sur le tissus mou) peut également entraîner un déplacement du guide par rapport à sa position initiale. Tel est particulièrement le cas si les aiguilles sont en nombre insuffisant ou si elles sont incorrectement orientées. Par exemple, l'utilisation de deux aiguilles ayant des axes parallèles ou des axes faiblement convergents ou faiblement divergents ne permet pas d'assurer une stabilité suffisante d'un guide reposant sur un tissu mou. Enfin, lorsque l'utilisateur d'un tel ensemble enfoncera par exemple la première aiguille munie d'une tête à son extrémité, la position du guide par rapport à l'os variera en fonction de la pression que l'utilisateur appliquera sur ladite tête quand elle butera contre la face extérieure du guide (à cause de l'élasticité du tissu mou). A nouveau, ceci risque d'entraîner un déplacement et donc une position incorrecte du guide par rapport à l'os.

On connaît également des ensembles dans lesquels les éléments de stabilisation sont des vis d'ostéosynthèse qui servent à transvisser le guide sur l'os. Il s'agit donc de vis qu'on fait d'abord passer au travers d'un trou du guide et qu'on visse ensuite dans l'os. Bien que le problème des vibrations induites par l'appareil de perçage et du délogement des éléments de stabilisation est réduit dans un tel cas, le problème du positionnement initial d'un guide subsiste car ce positionnement dépendra notamment du couple de serrage que l'utilisateur appliquera à la première vis d'ostéosynthèse lorsque ladite vis arrivera en butée contre la face extérieure du guide. Ce problème est à nouveau d'autant plus marqué que le guide est conçu pour reposer sur un tissu mou.

Aussi, le même problème de déplacement du guide se présentera si les vis sont en nombre insuffisant et/ou mal orientées les unes par rapport aux autres.

### Résumé de l'invention

Un but de l'invention est de fournir un ensemble qui résout au moins partiellement les problèmes des ensembles connus.

A cette fin, l'ensemble selon l'invention est caractérisé en ce que l'au moins un élément de stabilisation comporte des moyens de blocage aptes à empêcher un mouvement axial de l'élément de stabilisation vers un coté extérieur du guide.

Lorsqu'un élément de stabilisation selon l'invention est ainsi bloqué en position entre le guide et l'os du patient, la distance minimale qui séparera le guide de l'os sera fixe et déterminée par les caractéristiques dimensionnelles du guide et de l'élément de stabilisation et non pas par une action plus ou moins variable de l'opérateur, ni par des vibrations induites par l'appareil de perçage ni par une quelconque pression exercée sur le guide, par exemple lors du perçage guidé des cavités destinées aux implants. De plus, un tel élément permet de placer le guide à distance déterminée de l'os sans que le guide ne doive nécessairement reposer sur un milieu intermédiaire solide ou mou entre l'os et le guide, ce qui présente l'avantage que la forme du guide ne doit pas être à l'image de la morphologie du patient et qu'on peut donc utiliser un guide standard convenant pour un ensemble de patients.

De plus, avec un tel élément de stabilisation, les vibrations induites par l'appareil de perçage ne risqueront pas d'entraîner de délogement de l'élément de stabilisation.

Un autre but de l'invention est d'assurer une encore meilleure stabilisation du guide par rapport à l'os du patient.

A cette fin, l'ensemble selon l'invention est de préférence caractérisé en ce qu'il comporte au moins un premier et un deuxième élément de stabilisation et en ce que le guide est conçu de sorte à ce que le premier et le deuxième élément de stabilisation soient aptes à être placés en position de coopération avec le guide selon des axes différents et telle que le premier élément de stabilisation soit substantiellement en vis-à-vis du deuxième élément de stabilisation.

En effet, lorsqu'un tel ensemble est mis en oeuvre et que les deux éléments de stabilisation sont mis en place et ainsi bloqués en position entre le guide et l'os, le guide ne pourra ni se rapprocher de l'os (grâce aux moyens de blocage) ni s'en éloigner (grâce à disposition des éléments de stabilisation). Par ailleurs, aucune rotation du guide par rapport à l'os ne sera possible. Ainsi, le guide sera complètement ostéostabilisé.

Alternativement, l'ensemble selon l'invention est de préférence caractérisé en ce qu'il comporte au moins un premier et un deuxième élément de stabilisation, en ce que le guide est conçu de sorte à ce que le premier et le deuxième élément de stabilisation soient aptes à être placés en position de coopération avec le guide selon des axes non parallèles, et en ce que les moyens de blocage sont également aptes à empêcher un mouvement axial des éléments de stabilisation vers un coté intérieur du guide. Pour des raisons analogues à celles ci-dessus, une telle configuration alternative permet de complètement ostéostabiliser le guide.

Encore un autre but de l'invention est pouvoir réaliser le guide à moindre coût.

A cette fin, l'ensemble selon l'invention est de préférence caractérisé en ce que le guide comporte au moins une pièce rapportée et en ce que les moyens de blocage de l'élément de stabilisation sont aptes à coopérer avec ladite pièce rapportée pour empêcher un mouvement axial de l'élément de stabilisation vers un coté extérieur du guide.

En effet, une telle pièce rapportée peut alors être une pièce standard fabriquée en grandes quantités et à faible coût par des moyens de fabrication bien connus tels que par exemple le moulage ou l'injection.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
**Figs.1a,** 1b, 1c, 1d et 1e montrent schématiquement des vues en coupe de plusieurs exemples de réalisation d'un ensemble selon l'invention ;
Fig.2 montre schématiquement une vue en coupe d'un mode de réalisation préféré d'un ensemble selon l'invention ;
Fig.3 montre schématiquement une vue en coupe d'un autre mode de réalisation préféré d'un ensemble selon l'invention ;
Figs.4a, 4b et 4c montrent schématiquement des vues en coupe de plusieurs exemples d'un autre mode de réalisation préféré d'un ensemble selon l'invention ;
Fig.5 montre une vue en perspective d'un exemple de réalisation d'une pièce rapportée pouvant faire partie d'un ensemble selon l'invention ;
Fig.6 montre schématiquement une vue en coupe frontale d'un exemple de réalisation d'un ensemble selon l'invention en position stabilisée sur une mâchoire d'un patient ;
Fig.7 montre schématiquement une vue en coupe frontale d'un autre exemple de réalisation d'un ensemble selon l'invention en position stabilisée sur une mâchoire d'un patient ;

Les dessins des figures ne sont pas à l'échelle. Généralement, des éléments semblables sont dénotés par des références semblables dans les figures.

### Description détaillée de modes de réalisation particuliers

D'une manière générale, les guides permettant de percer des cavités de manière guidée dans un os d'un patient sont bien connus de l'état de la technique et ne seront donc pas décrits ici. Dans le cas d'un guide destiné à la pose d'implants dentaires, on se référera par exemple aux documents suivants : EP1848366, EP 2037834, US 20040259051. Pour des raisons de simplicité, on se limitera ici à décrire des modes de réalisation qui conviennent à la pose d'implants dentaires mais l'homme du métier comprendra néanmoins que les mêmes principes et modes de réalisation peuvent être appliqués à d'autres types d'implants.

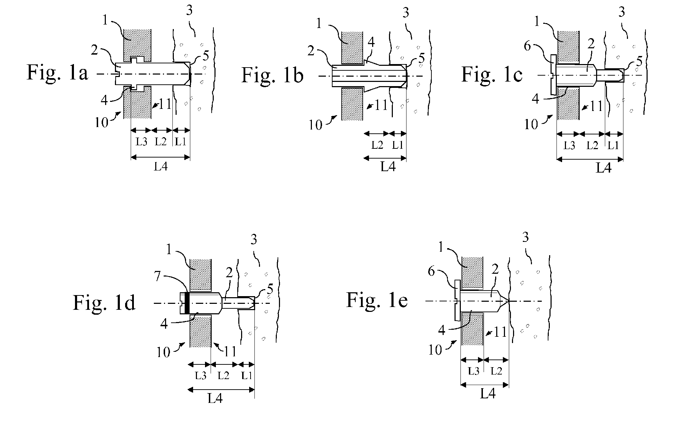

Les Figs.1a, 1b, 1c, 1d et 1e montrent schématiquement des vues en coupe de plusieurs exemples de réalisation d'un ensemble selon l'invention.

Sur chacune de ces figures, le guide (1) et l' os (3) du patient ne sont montrés que partiellement pour des raisons de clarté. Le milieu se situant entre le guide (1) et l'os (3) n'est pas représenté mais peut être n'importe quel milieu tel que par exemple du tissu gingival ou de l'air.

La Fig.1a montre un élément de stabilisation (2) en forme de tige cylindrique et comportant deux tétons latéraux. Le guide (1) comporte un trou présentant deux saignées axiales ainsi qu'une saignée circonférentielle dans sa face intérieure. On obtient ainsi un mécanisme du type baïonnette qui permet d'insérer la tige (2) dans le trou du guide (1) en faisant passer les tétons dans les saignées axiales et ensuite de placer les tétons dans la saignée circonférentielle par rotation de la tige autour de son axe longitudinal. Ainsi mise en place, la tige (2) ne pourra pas se déplacer axialement vers un côté extérieur (10) du guide (1). Il est à noter que la saignée circonférentielle ne doit pas nécessairement avoir la même largeur que les tétons, comme on le voit d'ailleurs sur la Fig.1a. L'important étant que les tétons puissent buter contre une partie du guide de manière à empêcher un mouvement axial de la tige (2) vers un côté extérieur (10) du guide. Au lieu d'une saignée circonférentielle, on pourrait par exemple prévoir un deuxième trou borgne de diamètre supérieur à celui du trou servant à faire passer la tige et s'étendant axialement à partir de la face intérieure du guide vers une partie intérieure du guide.

Alternativement, le guide (1) ne comporte pas de saignée circonférentielle et les saignées axiales s'étendent au travers de l'entièreté du trou du guide, auquel cas les tétons de la tige seront mis en butée contre une face intérieure du guide, ladite face intérieure pouvant éventuellement être munie d'encoches pour recevoir les deux tétons. Il s'agit alors d'un cas similaire à celui décrit ci-après en relation avec la Fig. 1b.

De préférence, la rainure circonférentielle est ajustée aux dimensions des tétons afin d'empêcher également un mouvement de la tige vers le côté intérieur (11) du guide.

De préférence, le diamètre intérieur du trou du guide est ajusté au diamètre extérieur de la tige afin d'empêcher un mouvement transversal du guide par rapport à la tige (2).

Pour faciliter la mise en rotation de la tige (2), celle-ci peut éventuellement être munie à son extrémité extérieure de moyens pour en faciliter la prise ou pour coopérer avec un outil, tel que par exemple une rainure transversale ou tout autre moyen approprié.

Les Figs 1b,1c et 1d montrent des exemples d'éléments de stabilisation selon l'invention comportant d'autres moyens de blocage (4) .

Dans la Fig.1b, l'élément de stabilisation (2) présente par exemple deux saillies latérales présentant chacune une face oblique et une face substantiellement perpendiculaire à l'axe de l'élément de stabilisation. On pourrait qualifier ce type d'élément de stabilisation de « flèche » ou de « harpon ». De préférence, un tel élément de stabilisation est creux et présente une fente axiale sur sa longueur afin de pouvoir le comprimer radialement pour son insertion dans le trou du guide et pour le retirer du guide après usage.

Dans la Fig.1c, l'élément de stabilisation (2) est une tige cylindrique présentant une partie proximale filetée et une partie distale non filetée. Le guide (1) comporte un trou taraudé apte à coopérer avec la partie filetée de l'élément de stabilisation (2). De préférence, la partie proximale se termine par une butée de fin de course (6), par exemple une tête de diamètre supérieur à celui du filet.

La Fig. 1d montre une variante de la Fig.1c et dans laquelle la tige (2) ne présente pas de butée de fin de course mais bien un marquage de fin de course (7), c'est-à-dire un marquage indiquant à l'utilisateur jusqu'à quelle profondeur il doit visser la tige dans le trou du guide.

Quel que soit le moyen de blocage utilisé, l'extrémité distale de l'élément de stabilisation (2) est conçue pour buter contre une partie de l'os (3) du patient.

Dans les exemples des Figs. 1a, 1b, 1c et 1d, il s'agit d'un contact avec le fond d'un trou borgne (5) ménagé dans l'os (3). Dans un tel cas, le diamètre intérieur du trou borgne (5) est de préférence ajusté au diamètre extérieur de l'extrémité distale de la tige afin d'empêcher un mouvement transversal du guide (1) par rapport à l'os (3).

Dans l'exemple de la Fig. 1e, il s'agit alternativement d'un contact avec une face extérieure de l'os (3). Le cas échéant, l'extrémité distale de l'élément de stabilisation (2) est de préférence pointue afin d'éviter un glissement de l'ensemble par rapport à l'os.

En aucun cas, un élément de stabilisation (2) selon l'invention n'est conçu pour être vissé dans l'os (3) du patient. De préférence, un élément de stabilisation selon l'invention ne comporte donc pas de partie filetée à son extrémité distale ou sur au moins une partie de son extrémité distale.

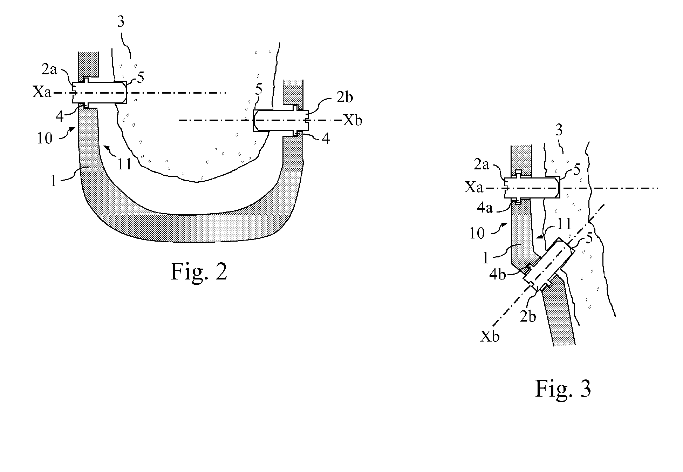

La Fig.2 montre schématiquement une vue en coupe d'un mode de réalisation préféré d'un ensemble selon l'invention. L'ensemble comporte dans ce cas au moins un premier élément de stabilisation (2a) et un deuxième élément de stabilisation (2b). Le guide (1) est conçu de sorte à ce que le premier élément de stabilisation (2a) soit apte à être placé en position de coopération avec le guide (1) selon un premier axe (Xa) et de sorte à ce que le deuxième élément de stabilisation (2b) soit apte à être placé en position de coopération avec le guide (1) selon un deuxième axe (Xb), différent du premier axe (Xa). Dans le cas illustré à la Fig.2, le premier axe (Xa) est par exemple parallèle au deuxième axe (Xb). Les deux axes pourraient aussi être divergents ou convergents. De plus, le guide (1) est conçu de sorte à ce que le premier et le deuxième élément de stabilisation (2a, 2b) soient aptes à être placés substantiellement en vis-à-vis l'un par rapport à l'autre, ou, autrement dit, de manière à ce que les extrémités distales de ces deux éléments se fassent au moins partiellement face.

Ainsi, lorsque les éléments de stabilisation (2a, 2b) sont insérés dans les trous borgnes (5) de l'os (3) et bloqués par rapport au guide (1), le guide ne disposera d'aucun degré de liberté de mouvement par rapport à l'os (3).

Si on utilise des éléments de stabilisation destinés à buter sur une face extérieure de l'os (3) (tel que par exemple ceux de la Fig. 1e), il restera toutefois un degré de liberté en rotation autour des deux points de contact. Dans ce cas, l'ensemble comprendra de préférence un troisième élément de stabilisation afin d'éliminer tout degré de liberté du guide (1) par rapport à l'os (3).

La Fig.3 montre schématiquement une vue en coupe d'un autre mode de réalisation préféré d'un ensemble selon l'invention. L'ensemble est analogue à celui décrit à la Fig.2, sauf que le guide (1) est ici conçu de sorte à ce que le premier axe (Xa) n'est pas parallèle au deuxième axe (Xb). Par ailleurs, les deux éléments de stabilisation (2a, 2b) comportent des moyens de blocage (4) qui sont également aptes à empêcher un mouvement axial des éléments de stabilisation vers un coté intérieur du guide (1). Dans le cas illustré, la saignée circonférentielle a en effet une largeur qui correspond substantiellement à la largeur des tétons latéraux des éléments de stabilisation. On pourrait alternativement utiliser un élément de stabilisation (2) tel qu'illustré en Fig. 1c ou en Fig. 1d à cet effet, ou tout autre ensemble permettant de bloquer l'élément de stabilisation (2) axialement dans les deux sens par rapport au guide (1). Il s'agit donc d'une autre configuration possible et par laquelle, lorsque les deux éléments de stabilisation sont insérés dans les trous borgnes (5) de l'os (3) et bloqués par rapport au guide (1), le guide ne disposera d'aucun degré de liberté de mouvement par rapport à l'os (3).

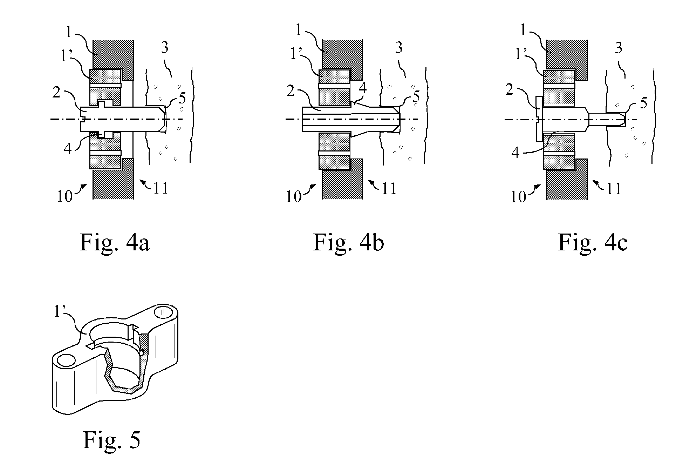

Les Figs.4a, 4b et 4c montrent schématiquement des vues en coupe de plusieurs exemples d'un autre mode de réalisation préféré d'un ensemble selon l'invention.

Le guide (1) comporte dans un tel cas au moins une pièce rapportée (1') qui pourra être fixée au guide (1) par collage, sertissage ou par tout autre moyen équivalent. Cette pièce rapportée (1') comporte un trou au travers duquel un élément de stabilisation (2) tel que décrit ci-dessus peut passer. Selon le type de moyen de blocage de l'élément de stabilisation (2) (téton, filetage, etc...), cette pièce comportera des moyens de coopération avec ledit moyen de blocage (saignées, taraudage, etc...) afin de pouvoir bloquer l'élément de stabilisation (2) par rapport à la pièce rapportée (1') et donc aussi indirectement par rapport au guide (1).

La pièce rapportée (1') sera de préférence un cylindre, de préférence un cylindre droit. La Fig.5 montre un exemple de réalisation d'un tel cylindre droit, percé d'un trou axial central. Une telle pièce rapportée correspond et est apte à coopérer avec un élément de stabilisation (2) tel qu'illustré à la Fig. 4a. Comme on le voit sur ces figures, la pièce rapportée (1') peut également comporter deux trous latéraux dont les axes sont parallèles à l'axe du trou central. Ces trous latéraux peuvent servir de moyens de guidage pour un appareil de perçage destiné à percer les trous borgnes dans l'os (3) du patient.

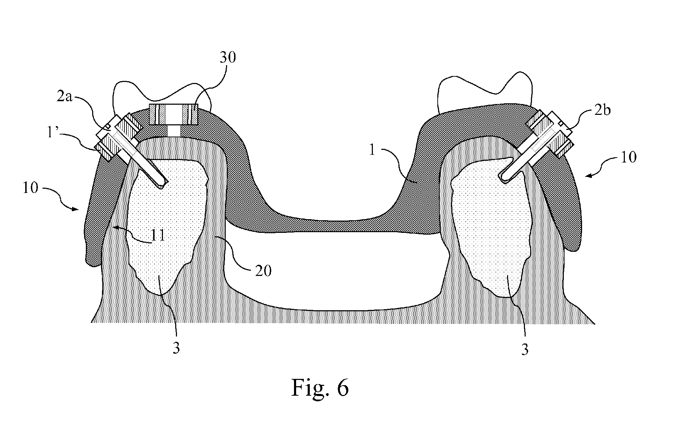

La Fig.6 montre schématiquement une vue en coupe frontale d'un exemple de réalisation d'un ensemble selon l'invention en position stabilisée sur une mâchoire d'un patient.

Dans ce cas, le côté intérieur (10) du guide (1) repose initialement au moins partiellement sur la gencive (20) du patient. On y voit également un moyen de guidage (30) qui permettra, après positionnement et stabilisation du guide par rapport à l'os, de percer une cavité dans l'os pour y loger un implant.

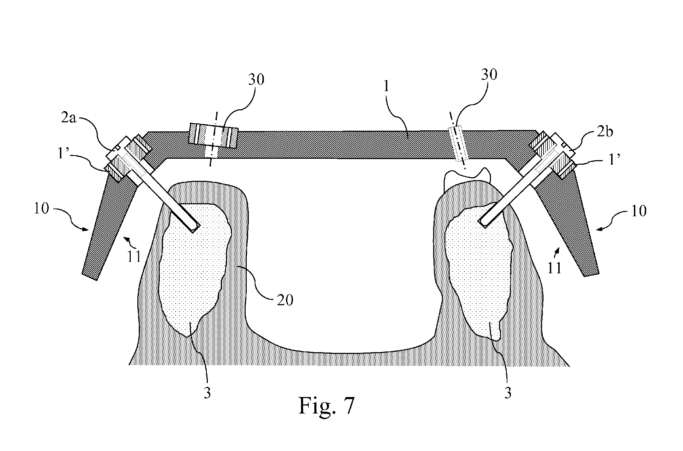

La Fig.7 montre schématiquement une vue en coupe frontale d'un autre exemple de réalisation d'un ensemble selon l'invention en position stabilisée sur une mâchoire d'un patient. Dans ce cas, le côté intérieur (10) du guide (1) ne repose initialement sur rien et ce sont les éléments de stabilisation (2a et 2b) qui seuls positionneront et stabiliseront le guide (1) par rapport à l'os (3) du patient. On comprendra que, dans un tel cas, le guide peut avoir une forme qui est relativement indépendante de la morphologie du patient (notamment de la forme de la surface gingivale et/ou de la forme de la surface des dents).

Il est intéressant de noter que, lorsque l'élément de stabilisation (2) selon l'invention est mis en place comme par exemple indiqué sur les figures Figs. 1a, 1b et 1c, le guide (1) sera nécessairement positionné et stabilisé à une distance (L2) par rapport à l'os (3), et que cette distance (L2) dépendra exclusivement des caractéristiques dimensionnelles de l'ensemble.

On a en effet la relation fixe suivante : L4 = L1+L2+L3 , dans laquelle .
L1 = la profondeur du trou borgne (5),
L2 = distance entre le côté intérieur (11) du guide et l'os
L3 = dimension du guide (1)
L4 = longueur axiale utile de l'élément de stabilisation (2), c'est-à-dire la distance axiale entre l'extrémité distale de l'élément de stabilisation (2) et l'endroit où les moyens de blocage (4) viennent buter contre le guide (1) lorsque l'élément de stabilisation (2) est en mis en place et qu'on tente de le déplacer vers le côté extérieur (10) du guide, comme indiqué sur les figures.

Il en va de même dans le cas de l'exemple de la Fig. 1e, sauf que dans ce cas la valeur de L1 est nulle puisque l'extrémité distale de l'élément de stabilisation (2) ne vient pas buter contre le fond d'un trou borgne (5) réalisé dans l'os (3) mais bien contre une face extérieure de l'os.

De préférence, la longueur axiale utile (L4) de l'au moins un élément de stabilisation (2) est individualisée, c'est-à-dire qu'elle est spécifique à la morphologie individuelle du patient auquel l'ensemble est destiné.

Pour fabriquer un élément de stabilisation (2) selon l'invention et dont la longueur est individualisée, on commence par obtenir des données relatives à la morphologie du patient, aux dimensions du guide et à la position opérationnelle du guide par rapport à l'os du patient. Il s'agit donc d'obtenir les distances L1, L2 et L3 décrites ci-dessus, et ceci pour chaque élément de stabilisation en fonction de sa position souhaitée par rapport au guide et donc par rapport à l'os. Ces données pourront par exemple être obtenues au moyen d'outils d'imagerie et de simulation bien connus de l'homme du métier.

On calcule ensuite la longueur axiale utile (L4) d'un élément de stabilisation sur base de ces données et par exemple sur base de la relation entre les différentes distances telle qu'indiquée ci-dessus : L4 = L1+L2+L3. Ayant calculé ainsi la longueur axiale utile (L4) de chaque élément de stabilisation (2), on fabriquera ces éléments à la longueur correspondante, et ceci au moyen de procédés de fabrication bien connus.

En planifiant et en fabriquant des éléments de stabilisation ayant une longueur axiale utile (L4) individualisée, et en plaçant ensuite simplement ces éléments de stabilisation en position bloquée dans le guide (1) et contre l'os (3) du patient, le guide sera automatiquement et nécessairement positionné et stabilisé comme il se doit par rapport à l'os du patient.

La présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limités aux exemples illustrés et/ou décrits ci-dessus. L'invention comprend chacune des caractéristiques nouvelles ainsi que toutes leurs combinaisons.

La présence de numéros de référence aux dessins ne peut être considérée comme limitative, y compris lorsque ces numéros sont indiqués dans les revendications.

L'usage des verbes « comprendre » , , « inclure », « comporter », ou toute autre variante, ainsi que leurs conjugaisons, ne peut en aucune façon exclure la présence d'éléments autres que ceux mentionnés.

L'usage de l'article indéfini « un », « une », ou de l'article défini « le », « la » ou « 1' », pour introduire un élément n'exclut pas la présence d'une pluralité de ces éléments.

En résumé, l'invention peut également être décrite comme un ensemble comportant un guide (1) pour percer des orifices de manière guidée dans un os (3) d'un patient afin de loger ensuite des implants dans lesdits orifices. L'ensemble comporte également des éléments de stabilisation permettant de relier le guide à l'os de manière à ce que le guide (1) soit dans une position stable par rapport à l'os (3) avant de commencer à percer lesdits orifices. L'élément de stabilisation (2) comporte des moyens de blocage (4) permettant d'empêcher un mouvement relatif de l'élément de stabilisation (2) par rapport au guide (1) lorsque ces deux parties sont reliées entre-elles. L'élément de stabilisation (2) étant par ailleurs en contact avec l'os (3), on obtient ainsi un ensemble parfaitement ostéostabilisé. De plus, une fois les éléments de stabilisation en place, la position du guide (1) par rapport à l'os (3) sera exclusivement déterminée par les dimensions des éléments de l'ensemble. De préférence, ces dimensions sont individualisées, c'est-à-dire propres à la morphologie individuelle du patient.

## Revendications

1. Ensemble comportant :
- un guide (1) pour guider le perçage de cavités dans un os (3) d'un patient, lesdites cavités étant destinées à recevoir des implants,
- au moins un élément de stabilisation (2) apte à coopérer avec le guide (1) et avec l'os (3) pour stabiliser le guide (1) dans une position déterminée par rapport à l'os (3) du patient,
**caractérisé en ce que** l'au moins un élément de stabilisation (2) comporte des moyens de blocage (4) aptes à empêcher un mouvement axial de l'élément de stabilisation (2) vers un coté extérieur (10) du guide.

2. Ensemble selon la revendication 1 **caractérisé en ce qu'**il comporte au moins un premier et un deuxième élément de stabilisation (2a, 2b) et **en ce que** le guide (1) est conçu de sorte à ce que le premier et le deuxième élément de stabilisation soient aptes à être placés en position de coopération avec le guide (1) selon des axes (Xa, Xb) différents et de sorte à ce que le premier élément de stabilisation (2a) soit substantiellement en vis-à-vis du deuxième élément de stabilisation (2b).

3. Ensemble selon la revendication 1 **caractérisé en ce qu'**il comporte au moins un premier et un deuxième élément de stabilisation (2a, 2b), **en ce que** le guide (1) est conçu de sorte à ce que le premier et le deuxième élément de stabilisation soient aptes à être placés en position de coopération avec le guide (1) selon des axes (Xa, Xb) non-parallèles, et **en ce que** les moyens de blocage (4) sont également aptes à empêcher un mouvement axial des éléments de stabilisation (2a, 2b) vers un coté intérieur (11) du guide.

4. Ensemble selon l'une quelconque des revendications précédentes **caractérisé en ce que** le guide (1) comporte au moins une perforation au travers de laquelle l'au moins un élément de stabilisation (2) est apte à passer pour ensuite coopérer avec le guide.

5. Ensemble selon la revendication 4 **caractérisé en ce que** la perforation est un trou taraudé et **en ce que** l'élément de stabilisation (2) comporte une partie filetée apte à coopérer avec le trou taraudé.

6. Ensemble selon la revendication 5 **caractérisé en ce que** l'élément de stabilisation (2) comporte une butée de fin de course (6).

7. Ensemble selon la revendication 5 **caractérisé en ce que** l'élément de stabilisation (2) comporte un marquage de fin de course (7).

8. Ensemble selon l'une quelconque des revendications précédentes **caractérisé en ce que** le guide (1) comporte au moins une pièce rapportée (1') et **en ce que** les moyens de blocage (4) de l'élément de stabilisation (2) sont aptes à coopérer avec ladite pièce rapportée (1') pour empêcher un mouvement axial de l'élément de stabilisation (2) vers un coté extérieur (10) du guide.

9. Ensemble selon l'une quelconque des revendications précédentes **caractérisé en ce que** l'au moins un élément de stabilisation (2) a une longueur axiale utile (L4) individualisée, c'est-à-dire propre à la morphologie individuelle du patient.

10. Procédé de fabrication d'un élément de stabilisation d'un ensemble selon la revendication 9 comportant les étapes suivantes :
- obtenir des données relatives à la morphologie du patient, aux dimensions du guide (1), et à la position opérationnelle du guide par rapport à l'os (3) du patient,
- calculer la longueur axiale utile (L4) de chaque élément de stabilisation (2) sur base de ces données ;
- fabriquer un élément de stabilisation présentant une longueur axiale utile (L4) telle que calculée à l'étape précédente.
